# EUROPEAN PATENT APPLICATION

(11) **EP 4 142 294 A1**
(43) Date of publication of application: **01.03.2023**
(21) Application number: 21193463.3
(22) Date of filing: 27.08.2021
(51) Int. Cl.: H04N 21/43, H04N 21/434, H04N 21/4405, H04N 21/4385, H04N 21/4623, H04N 21/2187, H04N 21/81, H04N 21/458, H04N 21/426, H04N 21/2668, H04N 21/435, H04N 21/44

(54) **SUBSTITUTION METHOD OF AT LEAST ONE PORTION OF A VIDEO STREAM AND VIDEO RECEIVER IMPLEMENTING THE METHOD**

(71) Applicant: Thomson Licensing, 35576 Cesson Sévigné Cédex (FR)
(72) Inventor: QUERE, Thierry, 35160 Montfort sur Meu (FR); LE GARJAN, Bruno, 35000 Rennes (FR); BEASSE, Roland, 35690 Acigné (FR)
(74) Representative: Vidon Brevets & Stratégie

(57) **Abstract**

The disclosure relates to a method for substituting a multimedia sequence in a multimedia stream, the method comprising: receiving by a multimedia receiver, a first multimedia stream; transmitting the first multimedia stream to a decoder of the multimedia receiver; at a first instant, interrupting the transmission of said first multimedia stream to the decoder, and transmitting a second multimedia steam to the decoder; and at a second instant, stopping the transmission of said second multimedia stream to the decoder, and resuming the transmission of the first multimedia stream to the decoder, from a part of said first multimedia stream having a timestamp corresponding to said second instant.

## Description

### TECHNICAL FIELD

The present disclosure generally relates to processing audio and video signals. More specifically, the present disclosure relates to a method and multimedia receiver for seamlessly substituting at least one portion of a broadcast live multimedia stream offered by a content provider.

The present disclosure applies to the delivery of multimedia content through mechanisms such as radio frequency broadcasts, satellite broadcasts, and various cable television (CATV) formats, for example. The present disclosure also applies to delivery of multimedia content through Internet Protocol television (IPTV), which allows multimedia content to be provided over a packet-switched network infrastructure utilizing Transport Control Protocol / Internet Protocol (TCP/IP) and/or related protocols. The multimedia content can be transmitted in the form of MPEG2-TS streams or HTTP live streams (HLS), etc.

### BACKGROUND

Livestreaming refers to online streaming media simultaneously recorded and broadcast in real-time. Livestreaming is particularly suited to the broadcasting of events, such as sports events, allowing the end-users to watch the event with a delay of at most a few seconds.

As livestreaming is now a financially viable market, in particular in the areas of e-sports and streamers, it is becoming a challenge for the various players in the distribution chain of this type of content who see it as a new source of income, particularly via the introduction of advertising messages in these live content broadcasts.

Content providers offering livestream content take upon themselves to introduce advertising messages in the livestreams to be broadcast leaving the task of finding ways to substitute these advertising messages with another content to the other players in the distribution chain.

In order to provide targeted advertising to their subscribers as a function of their subscriber profile data, Internet Service Providers (ISPs) came up with a solution in which a unicast or multicast server transmits a targeted advertising file to a specific set-top box, while the set-top box receives and decodes a livestream content.

In this solution, the decoded livestream content is then provided to a display device such as a TV set. At a given time in the set-top box, the targeted advertising file is decoded and then provided to the display device in order to be played. At the end of playing of the advertising file, the livestream content is decoded and provided again to the display device. In other words, when playing the advertising file, a portion of the livestream content, corresponding for example to the advertising messages already embedded in the livestream content, is replaced by the targeted advertising file.

This feature has been deployed in the last generation of set-top boxes by using two decoding modules, one for decoding the livestream content and the other for decoding the targeted advertising file.

Although such a solution enables an ISP to provide targeted advertising to their subscribers, it results in an increase in the manufacturing cost of the set-top-boxes.

It is desirable to provide a technical solution for providing targeted advertising to subscribers of an IPS which limits the manufacturing costs of the set-top-boxes

### SUMMARY

A method is described for substituting at least on portion of a multimedia stream. The method may include ... (*here will be inserted by us the main features of the invention as recited in the claims*)

### BRIEF DESCRIPTION OF THE DRAWINGS

The method and/or device may be better understood with reference to the following drawings and description. Non-limiting and non-exhaustive descriptions are presented below with the following drawings. In the figures, like referenced signs may refer to like parts throughout the different figures unless otherwise specified.
Figure 1 is a block diagram of a digital multimedia stream receiver according to an embodiment;
Figure 2 is a block diagram of an exemplary embodiment of a part of the digital multimedia stream receiver;
Figure 3 illustrates a substitution of video frames according to an embodiment;
Figure 4 is a block diagram of a digital multimedia stream receiver according to another embodiment; and
Figure 5 is a block diagram of a digital multimedia stream receiver, according to an embodiment.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope. All examples and conditional language recited herein are intended for educational purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. It should be understood that the drawings are for purposes of illustrating are not necessarily the only possible configuration for illustrating the disclosure.

In digital multimedia stream transmission, a multimedia stream, e.g., a stream comprising a video stream and an accompanying audio stream, is encoded by an encoder and transmitted by a content server to a receiver in a combined or multiplexed packet stream. In this combined packet stream, each packet type (audio or video) has a different packet identifier (PID) which is stored in packet headers. On the receiver side, the receiver can pick out the audio and the video packets from the multiplexed packet stream based on their PIDs, and feed them to the appropriate audio and video decoders.

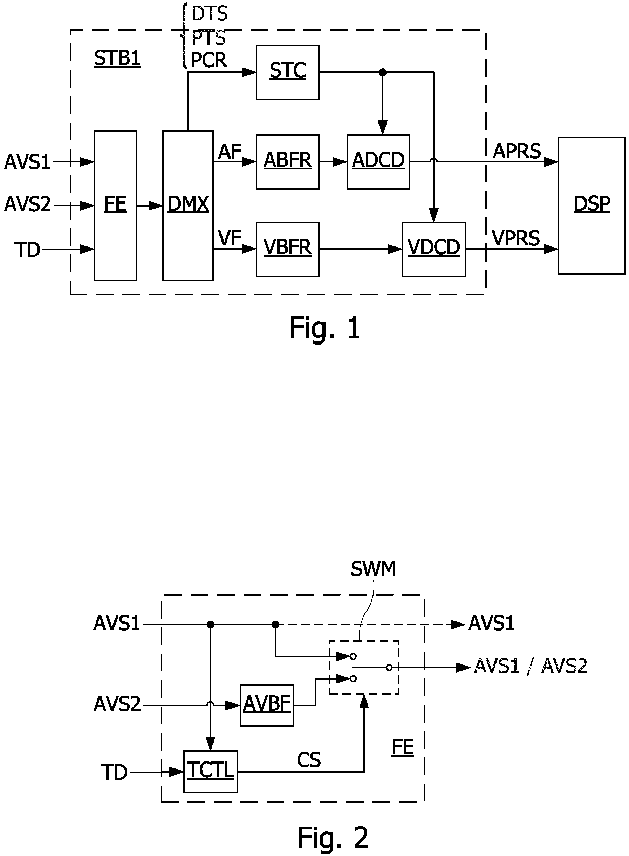

Figure 1 illustrates a digital multimedia stream receiver STB1 according to an embodiment. The receiver STB1 typically comprises a front-end module FE, a multimedia demultiplexer DMX, a video buffer VBFR and an audio buffer ABFR, a local oscillator or system time clock STC, and a decoding module comprising a video decoder VDCD and an audio decoder ADCD. The video decoder VDCD can be configured to process one video stream at a time. The receiver STB1 can be a set-top box, a smartphone, or a digital tablet.

Multimedia streams AVS1, AVS2 are received from content servers (not shown) to the front-end module FE. The front-end module FE is for example a network interface or a tuner. The front-end module FE selects one of the received multimedia streams AVS1, AVS2 and transmits the selected multimedia stream to the multimedia demultiplexer DMX. Based on the PIDs of the audio and the video packets included in the selected multimedia stream, the demultiplexer DMX is configured to sort the audio and the video packets included in the selected multimedia stream into a video stream VF and an audio stream AF. The video stream VF and the audio stream AF are buffered respectively in the video buffer VBFR and the audio buffer ABFR, each having a size sufficient to avoid data starvation. The video decoder VDCD and the audio decoder ADCD decode the video frame stream VF and the audio stream AF stored in the buffers VBFR and ABFR, and provide them to a display device DSP.

The multimedia streams AVS1, AVS2 typically include periodical timestamps defined with respect to a common time base, which are inserted by an encoder according to an encoder clock. These timestamps comprise program clock references PCR as well as decoding timestamps DTS and presentation timestamps PTS both given in units related to the PCR.

These timestamps enable the decoder to synchronize the video stream and the audio stream prior to their presentation to the display device.

The demultiplexer DMX also retrieves the program clock references PCR from packets of the selected multimedia stream, and provides them to the local oscillator STC, which uses them to synchronize with the encoder clock. The decoding timestamps DTS and presentation timestamps PTS of the video stream VF and the audio stream AF provided to the video decoder VDCD and the audio decoder ADCD by the demultiplexer DMX indicate a desired decoding times and presentation times of audio and video frames in relation to the program clock references PCR. The local oscillator STC synchronizes decoding operations performed by the decoders VDCD and ADCD. The video decoder VDCD and the audio decoder ADCD synchronously decode the video stream VF and the audio stream AF stored in the buffers VBFR and ABFR, respectively, and provide them to the display device DSP. The local oscillator STC can operate as a counter that is incremented with a frequency that is supposed to evolve with a same rate as the encoder clock.

According to an embodiment, multimedia stream AVS1 is a livestream content such as a soccer game and multimedia stream AVS2 is a substitution multimedia stream comprising targeted advertising content. Such a substitution multimedia stream AVS2 comprises time data TD specifying a start timestamp STSP and a substitution duration and/or an end timestamp ETSP.

In this embodiment, the front-end module FE is further configured to detect a packet containing the specified start timestamp in the first multimedia stream AVS1. Upon detection of this specific packet in the first multimedia stream AVS1, the front-end FE interrupts the transmission of the first multimedia stream AVS1 to the demultiplexer DMX and transmits, instead, the substitution multimedia stream AVS2 starting with the packet containing the specified start timestamp STSP. Once the packet of the substitution multimedia stream AVS2 comprising the end timestamp ESTP, or at a time of the time base greater or equal to the start timestamp PTS increased by the substitution duration, the front-end module FE switches back to transmitting the first multimedia stream AVS1 to the demultiplexer DMX. The resuming of the transmission of the first multimedia stream AVS1 to the demultiplexer DMX starts with a packet of the first multimedia stream AVS1 comprising a presentation timestamp TPS greater than or equal to the start timestamp STSP incremented by the substitution duration or to the end timestamp ESTP.

The substitution multimedia stream AVS2 can be received by the receiver STB1 from a multimedia server (not shown), e.g., according to the HTTP protocol (Hypertext Transfer Protocol). The start timestamp STSP and substitution duration can also be received by the receiver STB1 with the substitution multimedia stream AVS2, in another stream transmitted by the multimedia server or in a file downloaded by the receiver STB1 from the same multimedia server as AVS1 or from a different multimedia server than the multimedia server providing AVS1. Such a file can also be uploaded by the multimedia server to the receiver STB1.

According to another embodiment, this file, whether downloaded or uploaded, can contain an IP address of the multimedia server storing the substitution multimedia stream AVS2. In this manner the transmitted substitution multimedia stream AVS2 can be targeted to user preferences or a user profile. The substitution data (substitution multimedia stream AVS2 and time data TD) can be transmitted in response to a request transmitted by the receiver STB1 to the multimedia server or another dedicated server or pushed on the receiver STB1, when the receiver processes a multimedia stream received from a particular live channel.

Multimedia content distribution through digital networks uses standard compression systems such as MPEG-2 or JVT/H.264/MPEG AVC. MPEG standards specifies that a video stream comprises groups of pictures each comprising a sequence of one frame "I" and subsequent frames "P" and "B". Each frame "I" is encoded without any reference to other frames. Each frame "P" refers to a previous frame "I" or frame "P", meaning that a frame "P" can be decoded using the previously decoded frame. Each frame "B" refers to the previous and following frames "I" or "P". Each of the frames is included in a video packet including a timestamp referring to a same time base. The standard ISO/IEC 13818-7 specifies audio packets with timestamps.

Figure 2 shows an embodiment exemplifying front-end module FE. In Figure 2, the front-end module FE comprises a time control module TCTL and a switching module SWM receiving both the multimedia stream AVS1 and the substitution multimedia stream AVS2 and outputting a selected multimedia stream to the multimedia demultiplexer DMX (not shown). The front-end module FE can also comprise a memory AVBF to temporally store the substitution multimedia stream AVS2 before it is transmitted to the demultiplexer DMX. The time control module TCTL receives the time data TD related to the substitution multimedia stream AVS2 and extracts the presentation timestamps PTS and decoding timestamps DTS from the multimedia streams AVS1 to generate a control signal CS controlling the switching module SWM. The switching module SWM is configured to transmit either the multimedia stream AVS1 or the substitution multimedia stream AVS2 to the demultiplexer DMX as a function of the control signal CS provided by the time control module TCTL.

According to an embodiment, the time control module TCTL is configured to transmit a control signal CS to the switching module SWM triggering the transmission of the substitution multimedia stream AVS2 to the demultiplexer DMX when a start time specified by the time data TD corresponds to a timestamp PTS currently extracted from the multimedia stream AVS1. While the substitution multimedia stream AVS2 is transmitted to the demultiplexer DMX and to the decoders VDCD and ADCD, the front-end FE continues to receive the first multimedia stream AVS1. During the substitution with the substation multimedia stream AVS2, the first multimedia stream AVS1 is not processed.
The time control module TCTL is configured to transmit a control signal CS to the switching module SWM triggering the transmission of the multimedia stream AVS1 to the demultiplexer DMX when an end time specified by the time data TD corresponds to a timestamp PTS currently extracted from the multimedia stream AVS1.

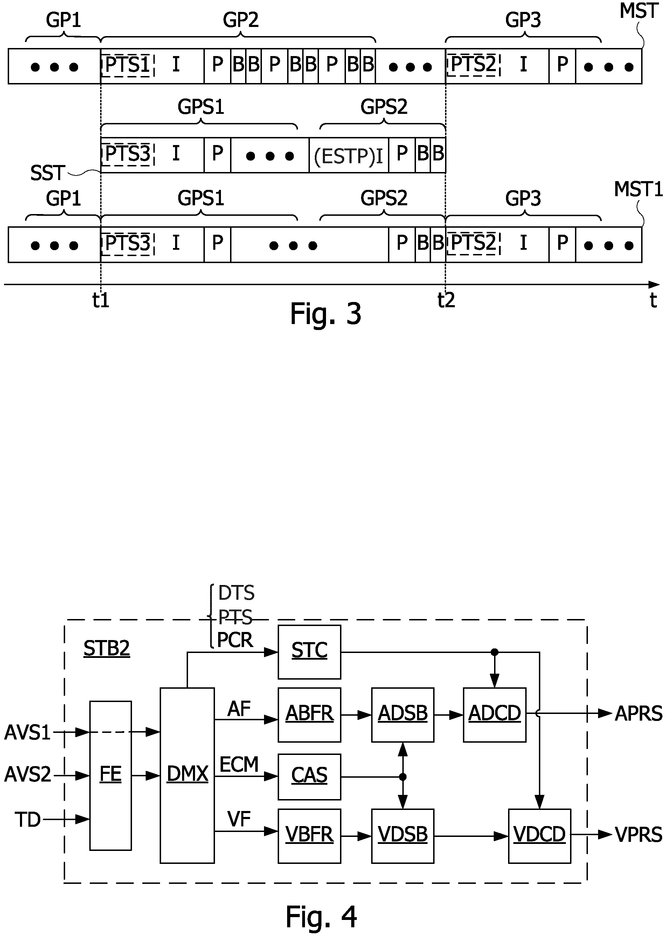

Figure 3 shows an example of a video stream MST of the first multimedia stream AVS1, currently processed by the receiver STB1. The video stream MST comprises successive groups of pictures including groups of pictures GP1, GP2, GP3, each comprising "I", "P" and "B" frames. The frame "I" of the group of pictures GP2 includes a presentation timestamp PTS1 and the frame "I" of the group of pictures GP3 includes a presentation timestamp PTS2. Figure 3 further shows an example of a portion SST of the substitution video stream AVS2 comprising successive groups of pictures, including a first group of pictures GPS1 and a last group of pictures GPS2. Each group of pictures of the portion SST also comprises "I", "P" and "B" frames. The first group of pictures GPS1 of the portion SST includes a timestamp PTS3.

In the example of Figure 3, the start timestamp STSP in the received time data TD is the timestamp PTS1 of the image "I" of the group of pictures GP2 corresponding to a time t1 of a time base t of the video stream MST. The duration in the received time data TD is equal to the duration of several groups of pictures including the group GP1, i.e., the difference between a time t2 corresponding to the timestamp PTS2 of the image "I" of the group of pictures GP3 and time t1.

During the substitution process, the video buffer VBFR stores in the following order:
- the group of pictures GP1 of the video stream MST,
- the groups of pictures from the first group of pictures GPS1 to the last group of pictures GPS2 of the portion SST, and
- the groups of pictures of the video stream MST from the beginning of the group of pictures GP3.

When the first frame of the group of pictures GP3 to be processed by the decoder VDCD in the video stream MST is a frame "I", as in the example of Figure 3, the decoder VDCD can decode the frame without using another frame. Therefore, the transition from the end of the portion SST of the substitution multimedia stream AVS2 back to the video stream MST can be reduced to less than 100 milliseconds (ms), which is barely perceptible by a user.

The audio stream of the first multimedia stream AVS1 and the audio stream of the substitution multimedia stream AVS2 also comprise audio data packets each including a timestamp. Thus, a similar substitution process can be performed to replace a portion of the audio stream corresponding to the multimedia stream AVS1 with the audio stream of the substitution multimedia stream AVS2.

In this manner, a targeted advertising sequence intended for the user of the set-top box STB1 can be transmitted by an operator and played by a TV set of the user during the transmission of a multimedia stream provided by a multimedia content provider. This result can be reached with a slightly modified set-top box, and especially a set-top box including a single video decoder that can process a single video stream at a time. Therefore, the additional hardware and/or software required to implement the multimedia stream substitution is limited. In addition, the substitution is performed with a latency which is barely noticeable by the user. Therefore, this substitution method is particularly well suited for live programs.

The first multimedia stream AVS1 can include only an audio or a video stream. Thus, the substitution process may be performed only on audio or video streams. Moreover, the duration data of the substitution can be specified by the timestamp, PTS2, of the frame "I" of the group of pictures GP3 of the first multimedia stream MST from which the transmission of the first multimedia stream resumes after the substitution, or the timestamp of the last multimedia packet (audio packet and/or video frame) of the substitution portion SST to be substituted.

During the transitions between the audio stream and video stream MST and the substitution audio portion and video portion SST, audio and video codecs of the decoders ADCD, VDCD can be restarted or reset to avoid artifacts and audio glitches, thus providing smooth transitions as can be seen in the audio/video rendering. Further, to avoid additional seeks, i.e. resuming the displaying of a content x seconds backward or forward the current time, during these transitions, the current values of the timestamps stored by the audio and video decoders ADCD, VDCD can be set to the new values, e.g. PTS2 at the beginning of the substitution process, and e.g. PTS3, at the end of the substitution process. This measure can allow to reduce the duration of the transitions between the multimedia streams AVS1 and AVS2 by 100 ms.

According to another embodiment, the front-end module FE is configured to set the timestamps of the portion SST in the second multimedia stream AVS2 in the time base of the first multimedia stream AVS1. This measure also avoids additional seeks during the transitions between the first multimedia stream AVS1 and the substitution multimedia stream AVS2.

Since, the audio and video data to be decoded are stored in the buffers ABFR, VBFR, trick modes and seek requests, i.e. requests for skipping x seconds backward or forward while playing a content, from the user within the substitution portion SST are supported, and jumps outside this portion SST can be processed displaying the first multimedia stream AVS1 again, as if no substitution has occurred. Of course, trick modes and seek requests could be forbidden at the request of the operator to force the user to watch the whole substitution portion SST.

At the end of the substitution process, the receiver STB1 may transmit to the server a substitution report specifying a substitution completion ratio, this ratio being lower than 100% if the substitution is interrupted before the end of the multimedia substitution portion SST, for example when the user selects another live channel during the substitution or uses a trick mode such as a fast forward.

The portion of the first multimedia stream AVS1 that is not decoded may be an advertising sequence within a group of several generic advertising sequences that can be inserted in a live multimedia stream by a content provider. The substitution multimedia portion SST may be a targeted advertising sequence having the same duration as the substituted advertising sequence of the first multimedia stream.

Multimedia streams can be scrambled or encrypted using control words which are also transmitted in a scrambled form in fields of entitlement control messages ECM. The control words have a validity duration commonly referred to as crypto period. The control words are received for a current crypto period and an upcoming crypto period. These control words are generally referred to as odd and even keys. Signalization included in the transmission, (e.g., according to the Digital Video Broadcasting "scrambling control bits"), indicates which key should be used for descrambling the data corresponding to the current crypto period and which key should be used for descrambling the data corresponding to the upcoming crypto period (i.e., odd or even keys).

Figure 4 illustrates a digital multimedia stream receiver STB2 according to another embodiment. The receiver STB2 differs from the receiver STB1 in that it can process scrambled or encrypted multimedia contents. To this purpose, receiver STB2 further comprises, in addition to the components of the receiver STB1, a control access module CAS, and audio and video descrambling modules ADSB, VDSB. The demultiplexer DMX is further configured to extract entitlement control messages ECM from the received multimedia streams AVS1, AVS2 and to provide them to the control access module CAS. The control access module CAS is configured to provide decrypting keys to the descrambling modules ADSB, VDSB. The descrambling modules ADSB, VDSB read the data to be processed respectively in the buffers ABFR, VBFR and provide the descrambled data respectively to the decoders ADCD, VDCD.

According to an embodiment, the front-end module FE always transmits the first multimedia stream to the demultiplexer DMX and the latter still extracts the entitlement control messages ECM from the first multimedia stream MST (AVS1) even when the demultiplexer feeds the multimedia portion SST (AVS2) to the decoders ADCD and VDCD and stores the entitlement control messages ECM from the first multimedia stream MST and entitlement control messages ECM from the portion SST in the buffers ABFR, VBFR. In this manner, the odd and even keys related to the first multimedia stream MST are available to the descrambling modules ADSB, VDSB at the end substitution process when transition from the multimedia portion SST to the first multimedia stream MST occurs. This measure can allow to reduce the substitutions by 200 ms when the first multimedia stream MST is scrambled.

According to an embodiment, the multimedia server transmitting the multimedia streams to the receiver STB2 is configured to transmit subsequent entitlement control messages ECM of the first multimedia stream AVS1 after the transition thereto only if the decoders ADCD and/or VDCD decode the substitution multimedia portion STT from the beginning to the end of the sequence, to ensure that the user watches the whole substitution multimedia portion.

Since only one multimedia stream is decoded and descrambled at a time, much less hardware and software are needed as well.

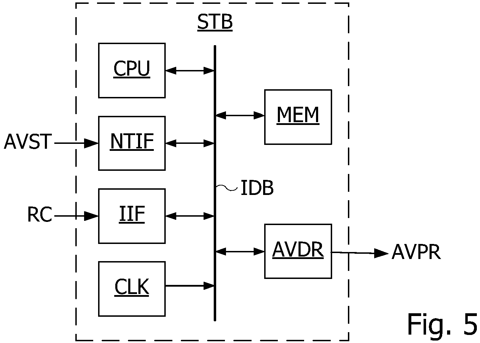

Figure 5 illustrates an architecture of a multimedia receiver STB1/STB2. The device STB1/STB2 includes a central processing unit CPU, a memory MEM, a network interface NTIF, an audio/video driver AVDR, an input interface IIF, and a clock unit CLK, which are interconnected by means of an internal address and data bus IDB. The network interface NTIF enables the device to be connected to a network, such as a multimedia content provider for receiving multimedia streams AVST and files. The input interface IIF enables the device STB1/STB2 to receive instructions from a user, for example from a remote control, a touchscreen, a keyboard or mouse. The audio/video driver AVDR includes an output for connection to an internal or external display or display device DSP. The memory MEM comprises instructions that, when executed by the central processing unit CPU, implement an embodiment of a method according to the principles disclosed above, and more particularly, the modules FE, DMX, CAS, ADSB, VDSB, ADCD, VDCD. The clock unit CLK may be used for synchronizing the audio and video decoders ADCD, VDCD. A device implementing an embodiment according to the present principles does not necessarily require all the elements shown. For example, a device implementing embodiments according to the present principles does not necessarily include the input interface IIF.

It is to be appreciated that the methods and devices as set forth above applies as well to UHD, HD (High Definition) and SD (Standard Definition) multimedia streams. In addition, the video streams of the first multimedia stream and the substitution multimedia stream may not necessarily be in the same format (e.g. UHD, HD, SD, etc.).

Further, the substitution multimedia stream is not necessarily transmitted to the multimedia receiver, but may be present in a memory thereof.

Further, the substitution multimedia stream has not necessarily the same playing duration as the substituted portion of the first multimedia stream AVS1. In fact, the second multimedia stream AVS2 can have a delay or advance with respect to the first multimedia stream AVS1.

Further, it is to be appreciated that aspects of the disclosed embodiments can be embodied as a system, method or computer readable medium. Accordingly, aspects of the disclosed embodiments can take the form of an entirely hardware embodiment, an entirely software embodiment (including firmware, resident software, microcode and so forth), or an embodiment combining hardware and software aspects that can all generally be defined to herein as a "circuit", "module" or "system". Furthermore, aspects of the disclosed embodiments can take the form of a computer readable storage medium. Any combination of one or more computer readable storage or more computer readable storage mediums can be utilized.

Thus, for example, the diagrams presented herein represent conceptual views of illustrative system components and/or circuitry embodying the principles of the disclosed embodiments. Similarly, it is to be appreciated that the various disclosed methods and processes may be substantially represented in computer readable storage media and so executed by a computer or processor, whether or not such computer or processor is explicitly shown.

A computer readable storage medium can take the form of a computer readable program product embodied in one or more computer readable mediums and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for substituting at least one portion of a multimedia stream, the method comprising:
receiving by a multimedia receiver, a first multimedia stream;
transmitting the first multimedia stream to a decoder of the multimedia receiver;
at a first instant, interrupting the transmission of said first multimedia stream to the decoder, and transmitting a second multimedia steam to the decoder; and
at a second instant, stopping the transmission of said second multimedia stream to the decoder, and resuming the transmission of the first multimedia stream to the decoder, from a part of said first multimedia stream having a timestamp corresponding to said second instant.

2. The method of claim 1, further comprising receiving, by the multimedia receiver, substitution duration data specifying the first instant and the second instant in a time base of the first multimedia stream.

3. The method of claim 1, wherein the first multimedia stream has at least one of the following features:
the first multimedia stream is a live multimedia stream,
the first multimedia stream comprises an audio and/or a video stream, and
the first multimedia stream comprises a video stream in a standard definition, a high definition, or an ultra-high definition.

4. The method of claim 1, wherein the time data are received in a file containing a network address of a server storing the substitution multimedia stream.

5. The method of claim 1, wherein the first multimedia stream being encrypted, the method further comprising:
receiving entitlement messages including decryption keys for decrypting the first multimedia stream, each decryption key having a respective validity period;
extracting the decryption keys from the entitlement messages;
decrypting the first multimedia stream using the decryption keys and taking into account a time base of the first multimedia stream with respect to the validity periods of the decryption keys, before decoding the first multimedia stream; and
during the decoding of the second multimedia stream, continuing to receive the entitlement messages of the first multimedia stream and extract the decryption keys.

6. The method of claim 1, further comprising receiving, by the multimedia receiver, substitution duration data comprising one of the following data:
a duration of the portion of the first multimedia in the first multimedia stream to be substituted,
a timestamp of a last multimedia packet of the portion of the first multimedia in the first multimedia stream to be substituted, and
a timestamp of a first multimedia packet of the first multimedia stream to be decoded and following the stopping of the decoding of said second multimedia stream.

7. The method of claim 1, further comprising resetting audio and video decoders before transitions between the first multimedia stream and the second multimedia steam.

8. A multimedia receiver comprising a decoder and at least one processor configured to:
receive a first multimedia stream;
transmit the first multimedia stream to said decoder;
at a first instant, interrupt the transmission of said first multimedia stream to the decoder, and transmit a second multimedia steam to the decoder; and
at a second instant, stop the transmission of said second multimedia stream to the decoder, and resume the transmission of the first multimedia stream to the decoder, from a part of said first multimedia stream having a timestamp corresponding to said second instant.

9. The receiver of claim 8, further configured to:
receive time data specifying the first instant and the second instant in a time base of the first multimedia stream.

10. The receiver of claim 8, wherein the first multimedia stream being encrypted, the receiver is further configured to:
receive entitlement messages including decryption keys for decrypting the first multimedia stream, each decryption key having a respective validity period,
extract the decryption keys from the entitlement messages;
decrypt the first multimedia stream using the decryption keys and taking into account a time base of the first multimedia stream with respect to the validity periods of the decryption keys, before decoding the first multimedia stream, and
during the decoding of the second multimedia stream, continue to receive the entitlement messages of the first multimedia stream and extract the decryption keys.

11. A computer program product loadable into an internal memory of a computer and comprising code portions which, when executed by a computer configure the computer to carry out the steps of the method according to claim 1.

## Amended claims

### Amended claims in accordance with Rule 137(2) EPC.

1. A method for substituting at least one portion of a multimedia stream, the method comprising:
receiving by a multimedia receiver, a first multimedia stream;
transmitting the first multimedia stream to a decoder of the multimedia receiver;
generating a control signal for controlling a switching module configured to transmit either said first multimedia stream or at least a second multimedia steam to a demultiplexer of the feeding a decoder, said demultiplexer and said decoder being embedded in said multimedia,
the reception of the controlling signal by the switching module triggering :
at a first instant indicated in said controlling signal, an interruption of the transmission of said first multimedia stream to the demultiplexer, and a transmission of said second multimedia steam to the demultiplexer; and
at a second instant indicated in said controlling signal, a stopping of the transmission of said second multimedia stream to the demultiplexer, and a resuming of the transmission of the first multimedia stream to the demultiplexer, from a part of said first multimedia stream having a timestamp corresponding to said second instant.

2. The method of claim 1, further comprising receiving, by the multimedia receiver, substitution duration data specifying the first instant and the second instant in a time base of the first multimedia stream.

3. The method of claim 1, wherein the first multimedia stream has at least one of the following features:
the first multimedia stream is a live multimedia stream,
the first multimedia stream comprises an audio and/or a video stream, and
the first multimedia stream comprises a video stream in a standard definition, a high definition, or an ultra-high definition.

4. The method of claim 1, wherein the time data are received in a file containing a network address of a server storing the substitution multimedia stream.

5. The method of claim 1, wherein the first multimedia stream being encrypted, the method further comprising:
receiving entitlement messages including decryption keys for decrypting the first multimedia stream, each decryption key having a respective validity period;
extracting the decryption keys from the entitlement messages;
decrypting the first multimedia stream using the decryption keys and taking into account a time base of the first multimedia stream with respect to the validity periods of the decryption keys, before decoding the first multimedia stream; and
during the decoding of the second multimedia stream, continuing to receive the entitlement messages of the first multimedia stream and extract the decryption keys.

6. The method of claim 1, further comprising receiving, by the multimedia receiver, substitution duration data comprising one of the following data:
a duration of the portion of the first multimedia in the first multimedia stream to be substituted,
a timestamp of a last multimedia packet of the portion of the first multimedia in the first multimedia stream to be substituted, and
a timestamp of a first multimedia packet of the first multimedia stream to be decoded and following the stopping of the decoding of said second multimedia stream.

7. The method of claim 1, further comprising resetting audio and video decoders before transitions between the first multimedia stream and the second multimedia steam.

8. A multimedia receiver comprising a demultiplexer feeding a decoder, a switching module to transmit either a first multimedia stream or at least a second multimedia steam to said demultiplexer and at least one processor configured to:
receive said first multimedia stream;
transmit the first multimedia stream to said decoder;
generate a control signal for controlling the switching module,
transmit said controlling signal to the switching module, the reception of said controlling signal by the switching module triggering :
at a first instant indicated in said controlling signal, an interruption the transmission of said first multimedia stream to the demultiplexer and a transmission of said second multimedia steam to the demultiplexer; and
at a second instant indicated in said controlling signal, a stopping of the transmission of said second multimedia stream to the demultiplexer, and a resuming of the transmission of the first multimedia stream to the demultiplexer, from a part of said first multimedia stream having a timestamp corresponding to said second instant.

9. The receiver of claim 8, further configured to:
receive time data specifying the first instant and the second instant in a time base of the first multimedia stream.

10. The receiver of claim 8, wherein the first multimedia stream being encrypted, the receiver is further configured to:
receive entitlement messages including decryption keys for decrypting the first multimedia stream, each decryption key having a respective validity period,
extract the decryption keys from the entitlement messages;
decrypt the first multimedia stream using the decryption keys and taking into account a time base of the first multimedia stream with respect to the validity periods of the decryption keys, before decoding the first multimedia stream, and
during the decoding of the second multimedia stream, continue to receive the entitlement messages of the first multimedia stream and extract the decryption keys.

11. A computer program product loadable into an internal memory of a computer and comprising code portions which, when executed by a computer configure the computer to carry out the steps of the method according to claim 1.
